# EUROPEAN PATENT SPECIFICATION

(11) **EP 2 593 033 B1**
(45) Date of publication and mention of the grant of the patent: **27.03.2024**
(21) Application number: 11735986.9
(22) Date of filing: 05.07.2011
(51) Int. Cl.: A61C 8/00

(54) **Dental implant and abutment to be connected to the dental implant**
Zahnimplantat und Stützpfeiler anschliessbar zu diesem Zahnimplantat
Implant dentaire et butée dentaire destinée à être connectée à cet implant dentaire

(30) Priority: 14.07.2010 EP 10007280
(43) Date of publication of application: 22.05.2013
(73) Proprietor: Nobel Biocare Services AG, 8058 Zürich-Flughafen (CH)
(72) Inventor: JÖRNEUS, Lars, S-439 61 Frillesås (SE); PETERSSON, Henrik, CH-8037 Zürich (CH)
(74) Representative: Jensen, Olaf Sven
(86) International application number: PCT/EP2011/003323
(87) International publication number: WO 2012/007118

(56) References cited:
- EP-B1- 1 763 324
- WO-A1-2011/089057
- US-A1- 2008 261 175
- US-A1- 2008 261 176

## Description

### Field of the Invention

The present invention relates generally to the field of dental implants and more specifically to an internal connection implant. The invention also relates to the combination of an internal connection implant and a complementary abutment, and to an abutment.

### Background of the invention

A wide variety of dental implants currently exist in the art. Such dental implants commonly include a body with external threads for mounting and retaining the implant within the patient's mouth. Installation of the implant involves rotation of the implant into a predrilled or tapped site using a drive member such as a ratchet or other rotation means. The implant also includes a drive region, which may be located externally or internally. Various structures for both externally and internally driving the implant currently exist.

While many internally driven dental implants provide satisfactory torque transfer and stability between implant and abutment, implant connection failures continue to exist. Accordingly, there is a continuing need for an internal connection or internally driven implant, which provides improved torque transfer and implant/abutment stability, with a structure that can also minimize implant connection failure. There exist a number of interfaces in the art, of which US 6,733,291 B1 (Nobel Biocare) or EP 1 763 324 B1 (Keystone Dental Inc) discloses close examples. EP 1 763 324 B1 is the basis for the two-part form of the independent claims and discloses an internal connection dental implant and implant assembly in which the implant includes a lobed configuration for installing the implant and a beveled surface positioned on the proximal side of the lobed configuration for providing stability between the implant and a corresponding abutment. Further examples of interfaces can be found in US 2008/261175 A1, US 2008/261176 A1, and WO 2011/089057 A1..

One aspect with fixation of abutments to implant systems is that in some situations the abutment is not easy to align with the implant interface. If not properly aligned the risk for abutment or even implant failure is increased when the abutment is fixed to the implant with a screw, since the loads will not be properly distributed. The access to some parts of a patient's mouth as well as the visibility in the oral region makes it desirable to present a solution that facilitate proper alignment and subsequent fixation of abutment to an implant. There is a need in the art for a solution to the problem and especially for implant systems with a small radius. For implants having a small radius, the need for a solution is perhaps even greater since the available material for providing a connecting region is more limited.

### Summary of the invention

An object of the present invention is to provide an internal connection dental implant which in particular allows for a small implant radius or diameter.

This and other objects of the present invention will become apparent with reference to the drawings, the description of the preferred embodiment and the appended claims.

The present invention is defined in the appended independent claim(s). Embodiments are defined in the appended dependent claims.

### Brief description of the drawings

FIG. 1 is a side view showing an abutment and a dental implant in accordance with the present invention,
FIG. 2a is a perspective view of the abutment of FIG. 1,
FIG. 2b is an enlarged partial side view of the abutment of FIG. 1,
FIG. 3 is a cross sectional side view of the dental implant/abutment in accordance with the present invention when in an assembled state,
FIG. 4a is a side view illustrating the abutment of FIG. 1 to be coupled to a dental implant with a coupling screw,
FIG. 4b is a side view of the dental implant and a driver in accordance with the present invention.
FIG. 5 is a cross sectional side view of the dental implant/abutment in accordance with the present invention when in a fixed state,
FIG. 6 is a perspective view of an assembled abutment and implant,
FIG. 7a is a plan view of an abutment mating with the implant,
FIG. 7b is a top view of an implant,
FIG. 7c is a bottom view of an embodiment of the present abutment,
FIG. 7d shows an outer contour of the abutment in FIG. 7c, and
FIG. 8 is a cross sectional side view of a dental implant.

### Detailed description of preferred embodiments

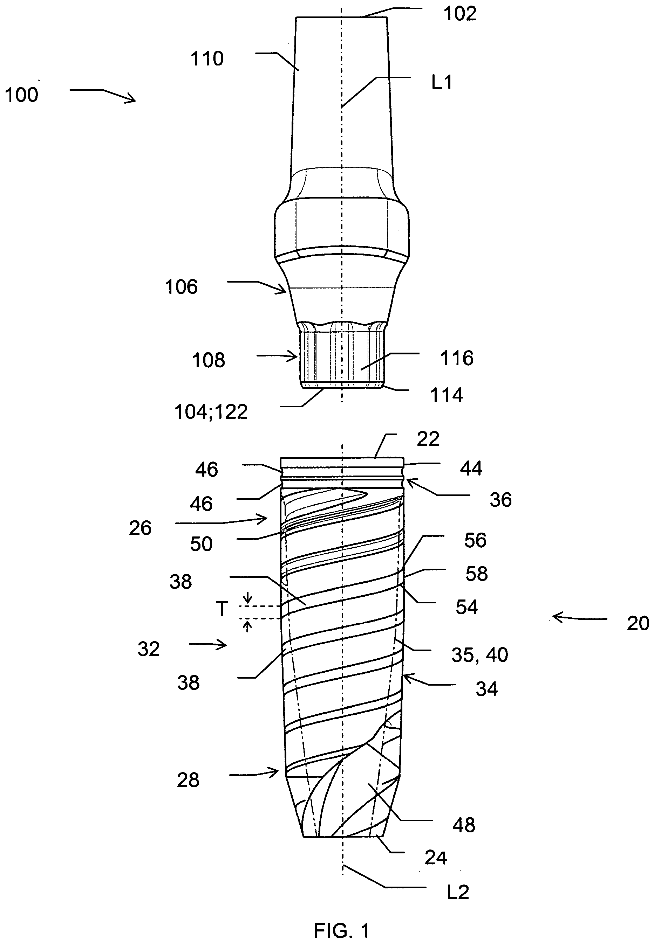

Fig. 1 illustrates an embodiment of a dental implant 20. In this embodiment, the implant 20 comprises an implant body 32, which includes a lower portion 34 and a collar 36. The implant 20 may be made of titanium, although other materials may be used, such as various types of ceramics. The lower portion 34 can be tapered and can include a pair of threads (implant retaining means) 38 that are located on an outer surface 35 of the lower portion 34. As will be explained below, although the illustrated embodiment includes a pair of threads 38 that each extends helically around the implant, modified embodiments may include more or less threads. In addition, as explained below, the body 32 is illustrated as being generally conical or tapered. However, in other embodiments, the body 32 can be substantially cylindrical or otherwise shaped. The dental implant 20 comprises a proximal end 22, a proximal portion 26 generally adjacent the proximal end 22, a distal end 24 and a distal portion 28 generally adjacent the distal end 24.

In the illustrated embodiment, the implant body 32 includes an outer surface or a bone apposition surface 40, which can be configured to promote osseointegration. In one embodiment, the bone apposition surface 40 is configured to promote osseointegration by increasing the surface area of the body 32. In this regard, the bone apposition surface 40 can be formed by roughening the implant body 32 in several different manners, such as, for example, by acid-etching, grit blasting, and/or machining. Alternatively, the bone apposition surface 40 can be formed by coating the underlying surface with a substance in order to promote osseointegration. In some embodiments, this may result in decreasing or increasing the surface area of the implant body 32. Calcium phosphate ceramics, such as tricalcium phosphate (TCP) and hydroxyapatite (HA) are examples of materials that can enhance osseointegration by changing the chemistry of the outer surface 40. In other embodiments, the outer surface 40 can comprise macroscopic structures, such as, for example, threads, micro-threads, indentations, and/or grooves that are configured to promote osseointegration and can be used alone or combined with the roughening and/or the coatings described above. In one embodiment, the outer surface 40 comprises a microstructure surface, such as, a highly crystalline and phosphate enriched titanium oxide micro structured surface with open pores in the low micrometer range. An example of such a surface is sold under the trademark, TiUnite^{™} by Nobel Biocare AB^{™}. In another embodiment, it is particularly advantageous for a zirconium ceramic body can be coated with porous zirconium to provide a microstructure surface. In another embodiment, the microstructure surface can be coated with a substance configured to promote osseointegration (such as bone growth stimulating substance).

With continued reference to Fig. 1, the collar 36 can lie above the lower portion 34 and, in the illustrated embodiment, can be integrally formed with or permanently affixed to the lower portion 34. The collar 36 can be defined at least in part by a sidewall 44. In the illustrated embodiment, the sidewall 44 includes two semicircular grooves 46 that are positioned circumferentially around the sidewall 44 of the collar 36. The semicircular grooves 46 can provide additional growth surface for soft tissue, such as that of a patient's gums. In one embodiment, the semi-circular grooves 46 have a width of about 150 microns and a depth of about 50 microns. The grooves 46 can be sized so that one or more grooves 46 occupy a substantial portion of the collar 36. In the illustrated embodiment of Fig. 1, two grooves 46 are shown as occupying a substantial portion of the collar 36 (e.g., greater than 50% of a total area). In modified embodiments, the collar 36 can be provided with more, less or no grooves and/or grooves with different dimensions and configurations. In other embodiments, circumferential protrusions or micro-threads can be provided on the collar 36. In general, such structures on the collar 36 are advantageously configured to load the harder cortical bone through which the implant 20 is inserted but to a lesser extent as compared to the threads 38 of the implant 20, which can be configured to engage the spongy cancellous bone positioned below the cortical bone. In other embodiments, the collar 36 can be non-cylindrical with, for example, inwardly tapered or have a reverse taper sidewall.

In the embodiment shown in Fig. 1, each of the threads 38 comprises a distal flank 54 and a proximal flank 56 that are connected by a face 58. As mentioned above the illustrated dental implant 20 includes a pair of threads 38 that begin at opposing sides of the distal end 24 and progress towards the proximal end 22 along the lower portion 34 while maintaining opposing positions along the lower portion 34 of the implant body 32. Accordingly, in the illustrated embodiment each of the threads 38 have the same pitch. It will be appreciated that, although the illustrated embodiment shows two threads 38, other suitable numbers of threads may also be used, such as one or three.

In the illustrated embodiment, the face 58 of each of the threads 38 increases in thickness T as the threads 38 progress from the distal end 24 to the proximal end 22 of the dental implant 20. That is, a distal portion of threads 38 in the distal portion 26 of the implant 20 comprises a thinner face than a proximal portion of the threads 38 on the proximal portion 28 of the implant 20.

The implant body 32 defines at least three different angles: a first angle can be defined by the general shape of the implant body 32; a second angle can be defined by the faces 58 of the threads 38; and a third angle can be defined by the base of the thread. With reference to Fig. 1, the conical shape of the lower portion 34 of the implant body 32 can comprise a variable angle. The variable angle can vary such that the angle at the distal portion 28 is shallower than that at the proximal portion 26. Further, the faces 58 of the threads 38 can also be conical and the faces 58 of the threads 38 can define a varying conical angle. The angle defined by the faces 58 of the threads 38 can be different from the varying conical angle formed by the lower portion 34 of the implant body 32. That is, the conical angle defined by the lower portion 34 of the implant body 32 can be shallower than the conical angle formed by faces 58 of the threads 38. In one embodiment, the conical angle defined by the lower portion 34 of the implant body 32 can be greater than the conical angle formed by faces 58 of the threads 38. Although the illustrated embodiment utilizes the aforementioned conical angle relations, other suitable relations may be used. Such suitable relations may comprise threads 38 in which the faces 58 are not conical and define a generally cylindrical shape and/or where the faces 58 of the threads 38 that define a conical angle that closely matches the conical angle of the lower portion 34 of the implant body 32.

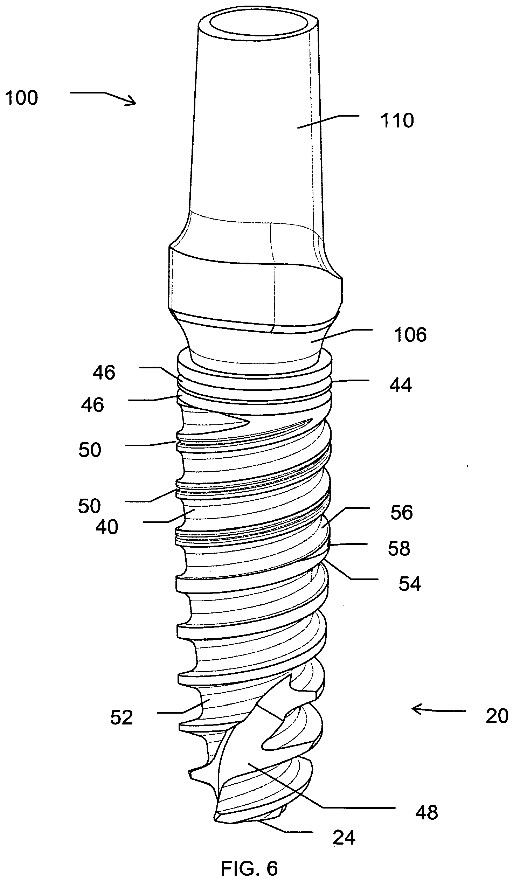

With reference to Fig. 1 the lower portion 34 of the dental implant 20 comprises two flutes 48 that are positioned on the distal portion 28 of the dental implant 20. The flutes 48 are configured to aid in inserting the dental implant 20 and will be discussed in greater detail below. The lower portion 34 also comprises upper grooves 50 that in the proximal portion 26 of the dental implant 20 are located on the faces 58 of each of the pair of threads. In the distal portion 28 of the implant, lower grooves 52 (see Fig. 6) may be located between each of the threads 38 on the surface 35 on the distal portion 28 of the dental implant 20. In general, the grooves 50 extend in a generally helical pattern. In the illustrated embodiment, each groove 50 is substantially continuous. However, in modified embodiments, one or both grooves 50 can be formed to be non-continuous. For example, the grooves 50 can be formed from a series of shorter grooves, dimples, or indentations that together form a generally helical pattern. However, continuous grooves can advantageously promote bone attachment as it has been observed that bone tissue likes to grow along continuous channels of certain dimensions.

With reference to Fig. 1 the flutes 48 can comprise a generally helical shape. Further, the flutes 48 can extend from the distal end 24 toward a generally central portion of the dental implant 20. The flutes 48 can be located at generally opposing positions along the lower portion 34 of the implant body 32. In the illustrated embodiment, the flutes 48 are configured to cut, or remove bone, when the dental implant 20 is rotated in a counterclockwise direction. Furthermore, the flutes 48 are configured to allow the dental implant 20 to be rotated clockwise without cutting or removing bone. However, bone removal may be accomplished by rotating the implant 20 counterclockwise.

Although the illustrated embodiment of the dental implant 20 has been shown with flutes 48 that are configured to cut when the dental implant 20 is rotated in a counterclockwise direction, other suitable flutes or flute orientations may also be used. Such suitable flutes or flute orientations may comprise flutes that are configured to cut or provide a tapping function when the dental implant 20 is rotated in a clockwise direction.

With continued reference to Fig. 1 the grooves 50 are located on the dental implant 20 to, e.g. provide additional surfaces for osseointegration. The grooves 50 can be located on the faces 58 of the portions of the threads 38 located on the proximal portion 26 of the dental implant 20. The grooves 50 can begin at the proximal end 22 of the lower portion 34 and extend toward the distal end 24 along the faces 58 of the threads 38 approximately over at least about 37% of the length of the lower portion 34. In the illustrated embodiment, the grooves 50 dissipate and/or taper toward the distal end 24 of the implant 20. The dissipation and/or tapering of the grooves 50 can occur over a distance approximately within a 1/4-1/2 rotation of the implant 20. In some embodiments, the portion of the faces 58 beyond the dissipation and/or taper will not include the grooves 50. The illustrated embodiment of Fig. 1 illustrates that the grooves 50 can extend approximately along the proximal 37% of the length of the lower portion 34; however, in other embodiments, the upper grooves 50 can be formed to extend approximately along the proximal 10% to the proximal 80% of the lower portion 34, and in other embodiments the upper grooves 50 may extend approximately along the proximal 20% to the proximal 50% of the lower portion 34.

In one embodiment, the configuration of the lower grooves and the upper grooves 50 can result in the upper and lower grooves 50 overlapping along at least a portion of the lower portion 34 of the implant body 32. Thus, there is a portion of the lower portion 34 of the implant body 32 that comprises both the upper and lower grooves 50. Although the illustrated embodiment shows that the upper grooves 50 and not the lower grooves, in other embodiments the upper grooves 50 and the lower grooves may or may not overlap and/or may terminate at a meeting point between the upper and lower grooves 50 or prior to a meeting point between the upper and lower grooves 50.

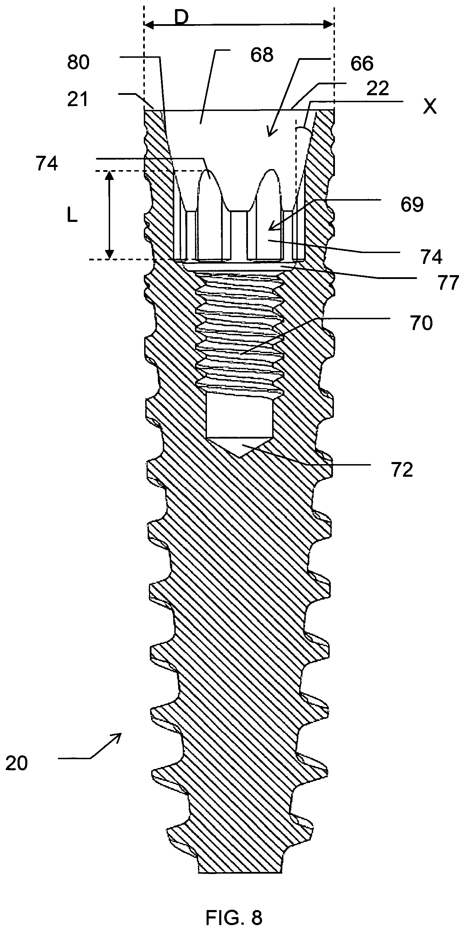

As best seen in Fig. 8, the dental implant 20 comprises a cavity or internal connection interface (internal bore) 66 that is open at the proximal end 22 of the dental implant 20. In the illustrated embodiment, the cavity 66 comprises - from the proximal/coronal end towards the distal/apical end - a first portion, a second portion, and a third portion. The first portion is an abutment chamber 68. The second portion comprises an internally facing drive region 69 with a plurality of interlocking lobes 74 extending in the longitudinal direction of the implant 20 and provided evenly distributed around the interior of the second portion. The third portion of the cavity 66 comprises a threaded chamber (internally threaded region) 70. The abutment chamber 68 and the internally facing drive region (interlock recess) 69 with the interlocking lobes 74 can be configured to receive an abutment 100 and the threaded chamber 70 can be configured to receive a coupling screw 200 that is configured to attach the abutment 100 to the implant 20.

The threaded chamber 70 can be located generally below the abutment chamber 68. Further, a region 77 between the internally facing drive region 69 and threaded chamber 70 can be omitted. This allows for a compact (short) interface, which may be beneficial when the body 32 of the implant 20 is tapered.

The abutment chamber 68 comprises a side wall (internally facing sloping surface) 80 that tapers inwardly with respect to the longitudinal axis L2 of the implant 20 providing a wider initial opening for the connection interface 66. The particular geometry of the abutment chamber 68 defines a conical half angle X with respect to the longitudinal axis L2. In one embodiment, the conical half angle X is between about 10 degrees and about 20 degrees. That is, the angle between the inner wall 80 and a longitudinal center line L2 preferably is between about 10 degrees and about 20 degrees. In one embodiment, the conical half angle X is about 12 degrees.

Yet another advantage of the illustrated embodiment is an area or thickness of the substantially planar top surface 21 of the implant 20. In one embodiment, the top surface 21 of the implant 20 advantageously provides a surface to support certain dental restorations on the top surface 21 of the implant 20. Additionally or alternatively, the top surface 21 can be used to support a component that bypasses the interlock recess 69. Accordingly, in one embodiment, the top surface 21 of the implant 20 has at least a thickness as measured between the outer and inner periphery of the top surface 21 that is greater than at least 0.2 mm and in another embodiment greater than about 0.25 mm. In one embodiment, the thickness of the top surface 21 is about 0.25 mm.

The embodiments described above provide for improved stability of a dental implant when implanted in the alveolar bone. Furthermore, certain embodiments of the invention provide efficient utilization of space. For example, as described above, in certain embodiments, the upper groove 50 is located on the face 58 of the thread 38 at a portion of the body 32 containing the internal connection interface 66. Hence, the strength of the body of the implant 20 at this location remains unaffected. If the upper groove 50 had been located on the body 32 at this portion, less space would have been available for the internal connection interface 66 with maintained minimum wall thickness at specific dimensions to maintain body strength. Hence, having the upper groove 50 positioned at the face 58 in the portion of the internal connection interface 66 improves the space available for the connection interface 66 and still provides for improved stability of the implant 20. In some embodiments, the wall thickness will be sufficient if the upper groove 50 is located at the face 58 only at the portion of the interlock recess 74 but at least partly not at the location of he threaded chamber 70.

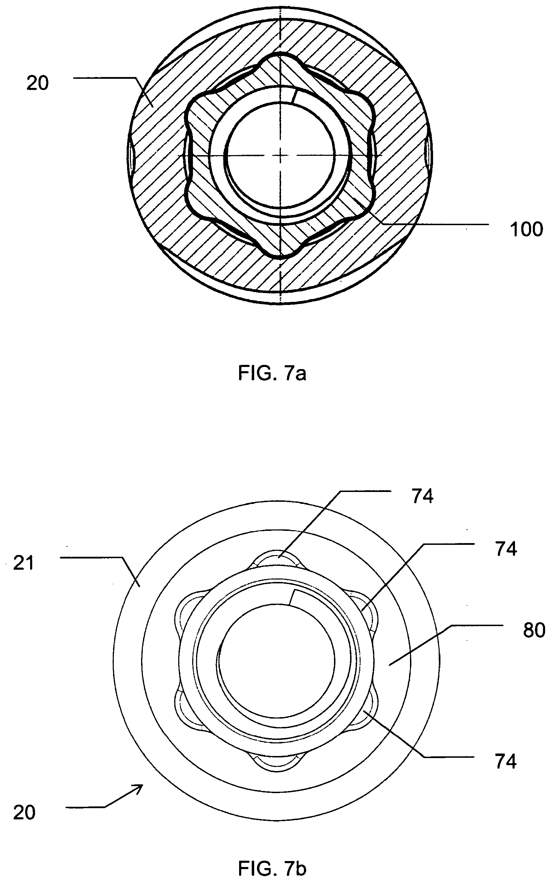

The drive region 69 of the implant 20 is comprised of a lobe configuration having a plurality of internally facing lobes, which includes a plurality of outwardly extending or concave lobes 74. In a currently preferred embodiment, the concave lobes 74 are angularly spaced from one another by 60°, as shown in Fig. 7b. Thus, in the preferred embodiment, there are six concave lobes 74. Preferably, the wall thickness of the drive region 69 is kept as small as possible, while still providing sufficient torque transfer to rotate and thus install the implant 20 into the jawbone of a patient and to also withdraw the implant, if needed. This in turn maximizes the strength of the implant 20 and reduces implant connection failures, both during installation and during use.

Preferably, each of the lobes 74 extends along substantially parallel lines. Thus, the lobes 74 extend substantially parallel to the longitudinal axis L2 of the implant 20.

Further, the lobes 74 extend partially up into the internally facing sloping surface 80, as seen in Figs. 7b and 8. In other words, the concave lobes 74 opens out in the abutment chamber 68 via the surface 80. In yet other words, the sloping surface 80 extends all the way to the most inwardly extending elements of the drive region 69.

Further, the outwardly extending concave lobes 74 are portions of circles having substantially the same or similar radii and have side walls which are substantially parallel to each other and to the longitudinal axis of the implant. This structure provides an outer wall of increased diameter to resist, and thus reduce, implant connection failure during installation or use, regardless of the implant size and particularly when in situations involving off-axis loading.

Although the preferred drive region 69 comprises a plurality of concave lobes formed of portions of substantially equal radii, certain advantages of the present invention can also be achieved by lobed configurations which are formed of circles with unequal radii or formed of configurations other than circles. In alternate configurations, the corresponding configurations of the abutment and the drive tools and placement heads are similarly altered.

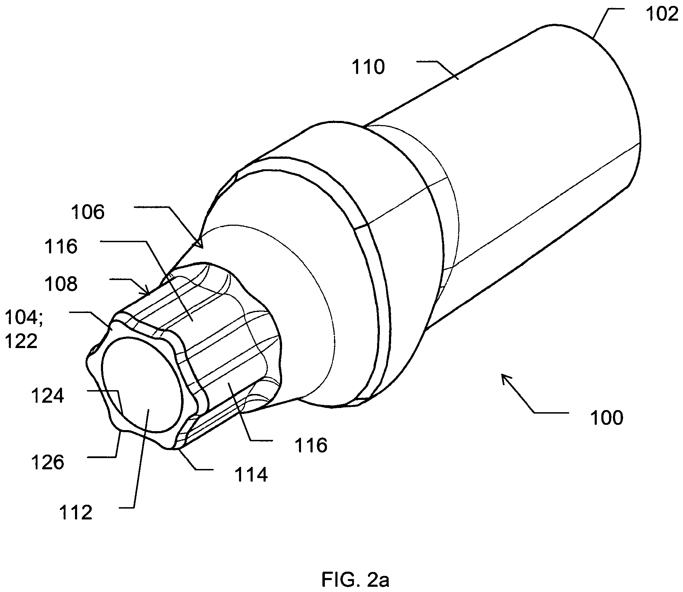

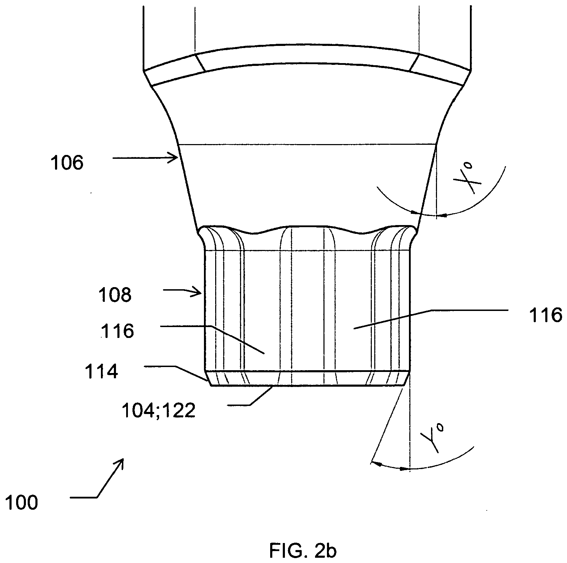

An abutment 100 in accordance with the present invention will now be described in particular with reference to Figs. 2a and 2b. The abutment 100 is connectable to the implant 20. The abutment 100 has a proximal end 102 and a distal end 104.

The abutment 100 further comprises a prosthesis mounting portion 110. Further, the abutment 100 comprises a central bore 112 extending through at least a portion of the prosthesis mounting portion 100 and to the distal end 104 of the abutment 100.

The abutment 100 further comprises a first abutment surface 106 which is sloping inwardly, towards its distal end, in relation to a longitudinal axis L1 of the abutment as seen from the side. The sloping angle of the first abutment surface 106 is denoted X, as seen in Fig. 2b. The first abutment surface 106 corresponds to the inner wall 80 of the implant 20.

The abutment 100 further comprises a second lobed abutment surface 108 distal to the first abutment surface and having a plurality of lobes 116. The lobes 116 are outwardly extending convex lobes 116. The number of outwardly extending convex lobes 116 may for instance be six. The lobes 116 are evenly distributed about the circumference of the surface 108. The second lobed abutment surface 108 may correspond to and be adjacent to the internally facing drive region 69 of the implant when the dental implant 20 and the abutment 100 are connected. Namely, the outwardly extending convex lobes 116 compliment and are designed for engagement with the concave lobes 74 of the implant 20.

The abutment 100 further comprises a third sloping abutment surface 114 which is sloping inwardly, towards its distal end, in relation to the longitudinal axis L1 as seen from the side. The second lobed abutment surface 108 is immediate to the third sloping abutment surface 114. The third sloping abutment surface 114 extends all the way to the distal end 104 of the abutment 100. The lobes 116 of the second lobed abutment surface 108 continue onto the third sloping abutment surface 114, and they also extend all the way to the distal end 104 of the abutment 100. Further, the lobes 116 at the third sloping abutment surface 114 are beveled, as seen for instance in Figs. 2a and 2b. Thus, a lobed distal end chamfer is formed on the abutment 100.

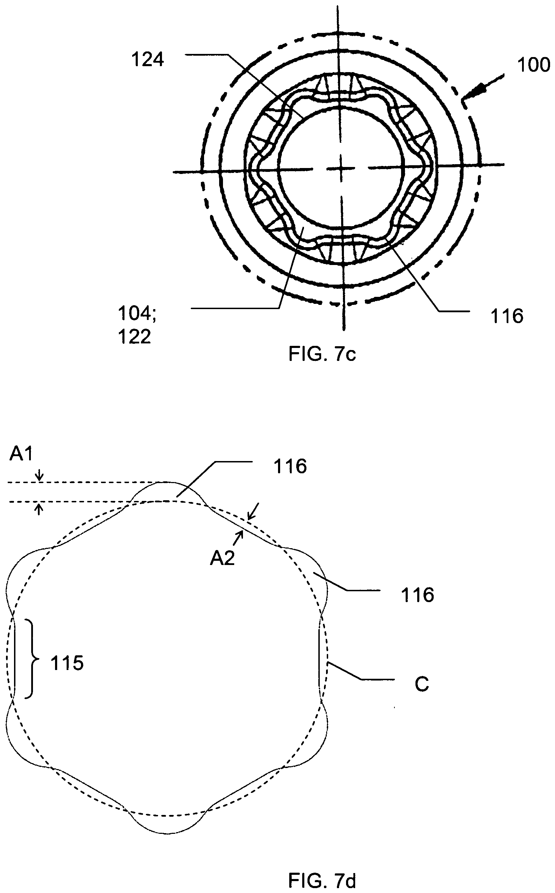

The sloping angle Y of the third sloping abutment surface 114 may be between 12.5 and 50 degrees. Further, as seen Fig. 7d, the convex lobes 116 lie on a circle C, wherein the distance A1 between the circle C and the radially most outwardly points of the convex lobes 116 may be greater than the maximum distance A2 between the circle and the radially most inwardly points of the regions 115 between the convex lobes 116. That is, A2 < A1. In this way, the regions 115 do not get too thin, as appreciated from Fig. 7c. Further, the lobes 116 are preferably beveled with substantially the same angle as the sloping angle Y of the third sloping abutment surface 114. Further, the end surface 122 of the abutment 100 at the distal 104 end may have an inner circular contour 124 defined by the central bore 110 and an outer non-circular contour 126 defined by the distal end of the third sloping abutment 114 surface with the lobes 116.

The third sloping abutment surface 114 with the beveled lobes 116 allows guiding of the abutment 100 toward the correct position when assembling the abutment 100 with the implant 20. Namely, if the lobes 116 of the abutment 100 and the lobes 74 of the implant 20 are not properly aligned when the abutment 100 and the implant 20 are brought together, by further twisting or rotating the abutment 100 in relation to the implant 20, the abutment 100 will readily fall into place. Overall, connection of the abutment 100 to the implant 20 is facilitated.

Further, the lobes 74 of the drive region 69 of the implant 20 may have a substantial length L of about 1.55 mm, for a 3.0 mm diameter D dental implant 20. This allows the abutment 100 to have an equally substantial "drop distance", when it goes from being improperly aligned with the drive region 69 (in which case the beveled ends of the lobes 116 are in contact with portions of the surface 80 between the lobes 74) to becoming properly aligned with the drive region 69 by rotating the abutment 100 about its axis L1. This in turn gives the user a clear tactile response that the abutment 100 is correctly positioned in the implant 20. L = 1.55 mm and D = 3.0 mm gives a ratio of 0.52 (L:D). This ratio is at least 0.4 for the present implant, more preferably at least 0.45. The portion of the abutment 100 with the second lobed abutment surface 108 and the third sloping abutment surface 114 should have a corresponding height to achieve the clear tactile response. This height may for example be about 1.35 mm for a 3.0 mm diameter D dental implant 20. The length L could also be contrasted to the inner diameter at the distal end 22. The inner diameter for a 3.0 mm diameter D implant 20 may for instance be 2.5 mm.

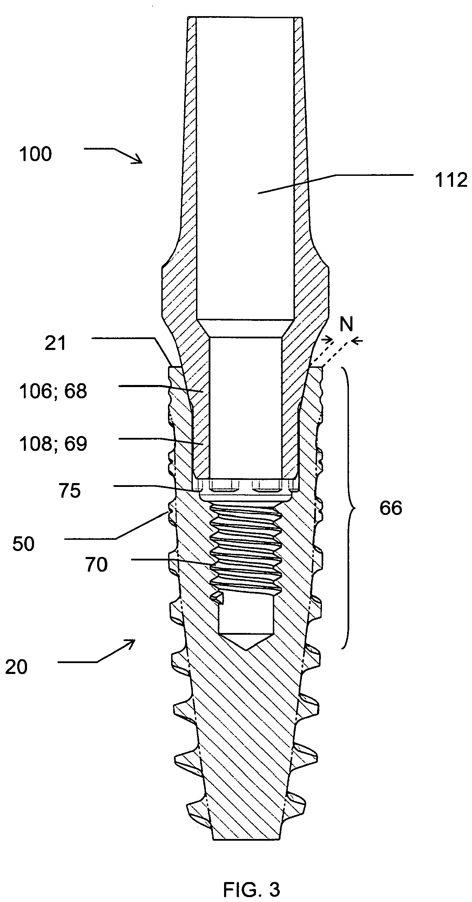

Fig. 3 is a side cross sectional view illustrating the abutment 100 assembled with the dental implant 20, but not yet connected or fixed with a coupling screw. As illustrated, the second lobed abutment surface 108 of the abutment 100 is aligned and inserted into internally facing drive region 69 of the dental implant 20. Furthermore, the conical portion of the abutment 100 with the first abutment surface 106 is inserted into the abutment chamber (receiving chamber) 68 of the dental implant 20. Although not currently preferred, the abutment 100 could be inserted into the cavity 66 of the dental implant 20 such that the distal end 104 is in contact with the lower end 75 of the interlock recess 74.

As also shown in Fig. 3, a top surface 21 of the implant 20 can remain exposed when the abutment 100 is coupled to the implant 20. In one embodiment, the exposed top surface has thickness N of at least about 0.2 millimeters and in one embodiment a thickness of about 0.25 millimeters. The thickness is at least 0.1 millimeters.

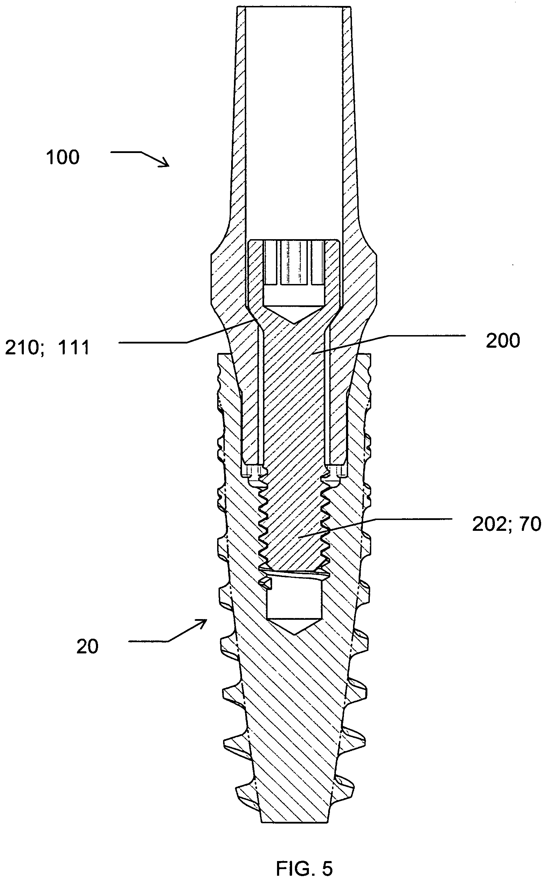

With reference to Fig. 5, the lower threaded region 202 of a coupling screw 200 can be engaged with the threaded chamber 70 of the dental implant 20, and a seat 210 of the coupling screw 200 is abutting a seat 111 of the abutment 100. This engagement of the coupling screw 200 and the abutment 100 and the dental implant 20 can thereby secure the abutment 100 to the dental implant 20.

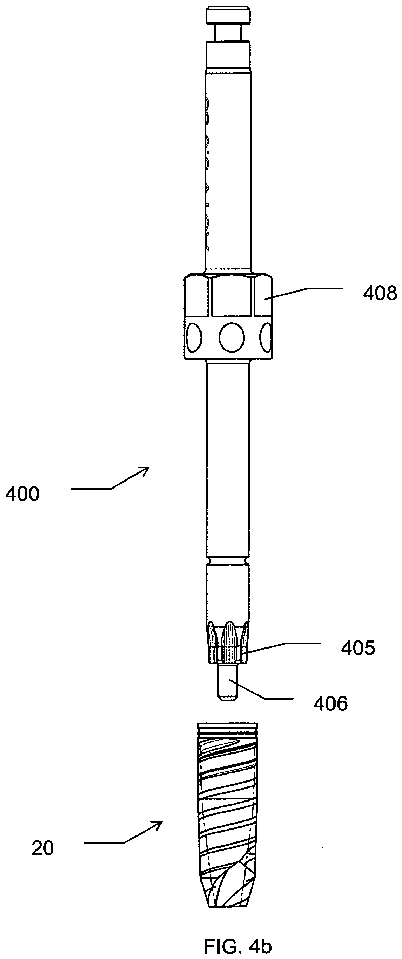

Fig. 4b shows an embodiment of a drive means (also called implant driver) 400 for installing the implant 20 in the jaw bone of a patient. The drive means 400 includes a guide portion 406 and a drive portion 405. The guide portion 405 comprises a generally cylindrical, unthreaded structure extending generally parallel to the longitudinal axis of the drive means 400. The drive portion 405 comprises a lobed configuration substantially similar to the lobed configuration of the second lobed abutment surface 108 of the abutment 100, so that when the drive means 400 is inserted into the implant 20 and rotated, the lobed configuration of the drive portion 405 mates with and engages the lobes 74 of the implant's 20 drive region 69 in driving relationship. The drive means 400 may further comprise a hex 408, a square or any other means to which a motorized or non-motorized instrument or the like can be applied to rotate the drive means 400 and thus the implant 20.

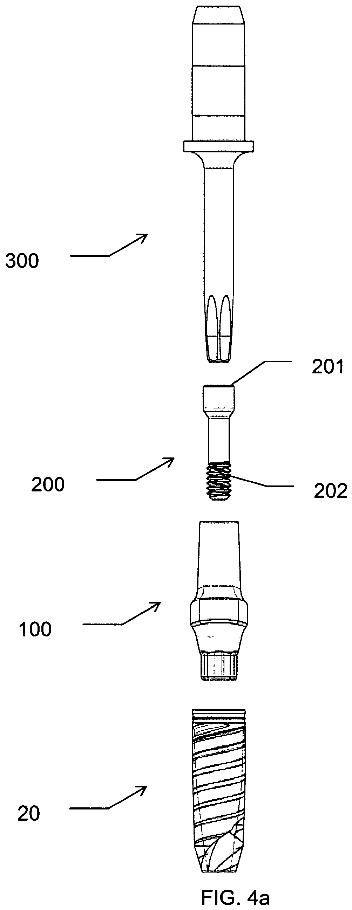

Having described the structure of the dental implant 20 and the abutment 100 of the present invention, their installation (not claimed) can be best understood as follows. First, after preparing an implant site within the patient's mouth, the implant 20 is installed by rotating the same, either with a direct drive means 400 such as is shown in Fig. 4b or with a preassembled fixture mount (not shown). After the implant 20 is installed to the desired installation depth, the drive means 400 or the fixture mount assembly is removed from the implant 20. The abutment 100 is then positioned within the open end of the implant, with the second lobed abutment surface 108 and the first sloping surface 106 of the abutment 100 being positioned within and engaging the drive region 69and sloping surface 80 of the implant 20, respectively. The coupling screw 200 is then inserted into the open end of the bore 112 and rotated by a ratchet 300, as indicated in Fig. 4a, or other rotation tool known in the art, whereby the lower threaded region 202 of the coupling screw 200 is threaded into the threads of the threaded chamber 70 of the implant 20. The coupling screw's 200 interface with the ratchet 300 or other rotation tool is designated by 201. Rotation of the screw 200 forces the sloping surface 106 of the abutment 100 against the sloping surface 80 of the implant's 20 abutment chamber 68 forming a tight friction fit. This provides stability between the abutment 100 and the implant 20.

It is intended that the scope of the present invention herein disclosed should not be limited by the particular disclosed embodiments described above, but should be determined only by the claims.

## Claims

1. A dental implant (20), comprising:
- a body (32);
- a longitudinal axis (L2);
- a distal end (24);
- an open proximal end (22);
- implant retaining means provided on an external portion of said body (32), the implant retaining means (38) comprising at least one thread (38);
- a collar (36);
- an internal bore (66) provided within a portion of said body (32), said internal bore (66) having a proximal end at the open proximal end (22) of said body (32) and a distal end (72);
- a first portion (68) of said internal bore (66) comprising an internally facing sloping surface (80) having a proximal end and a distal end, said sloping surface (80) extending from near the proximal end of said internal bore (66) toward the distal end of said internal bore (66), said sloping surface (80) being formed with a sloping path inwardly toward its distal end at an angle of 10 degrees to about 20 degrees relative to said longitudinal axis (L2) when the implant (20) is seen from the side;
- a second portion of said internal bore (66) comprising an internally facing drive region (69) positioned between the distal end of said sloping surface (80) and the distal end of said internal bore, the internally facing drive region (69) having a plurality of concave lobes (74); and
- a third portion of said internal bore (66) comprising an internally threaded region (70) positioned between said internally facing drive region (69) and the distal end of said internal bore (66),
**characterized in that** the body of the implant (20) is tapered, at least one groove (50) is located on the face (58) of the at least one thread at a proximal portion (26) of the dental implant (20), the plurality of concave lobes (74) extend partially up into the internally facing sloping surface (80), and a ratio (L:D) of the length of the lobes (74) to the implant's diameter is more than 0.4.

2. The dental implant (20) of claim 1, wherein the implant's diameter (D) is less than 3.1 mm, for example 3.0 mm.

3. The dental implant (20) of claim 1, wherein said angle is about 12 degrees.

4. The dental implant (20) according to any preceding claim, wherein the ratio (L:D) of the length of the concave lobes (74) to the implant's diameter is at least 0.45 and in particular 0.52.

5. The dental implant (20) according to any preceding claim, wherein the collar (36) is provided with at least one groove (46).

6. The dental implant (20) according to any preceding claim, wherein the concave lobes (74) are formed of portions of circles.

7. An abutment (100) to be connected to an implant (20) according to claim 1, wherein said abutment has a proximal end (102) and a distal end (104) and comprises:
- a first abutment surface (106) which is sloping inwardly, towards its distal end, in relation to a longitudinal axis (L1) of the abutment as seen from the side;
- a second lobed abutment surface (108) distal to the first abutment surface and having a plurality of lobes (116);
- a prosthesis mounting portion (110);
- a central bore (112) extending through at least a portion of said prosthesis mounting portion and to the distal end (104) of said abutment (100); and
- a third sloping abutment surface (114) which is sloping inwardly, towards its distal end, in relation to the longitudinal axis (L1) as seen from the side,
**characterized in that** said second lobed abutment surface (108) is immediately adjacent to said third sloping abutment surface (114), the third sloping abutment surface extends all the way to the distal end (104) of the abutment (100), the lobes (116) of the second lobed abutment surface (108) continue onto the third sloping abutment surface (114) and also extend all the way to the distal end (104) of the abutment (100), and the lobes (116) at the third sloping abutment surface are beveled.

8. The abutment of claim 7, wherein the sloping angle (Y) of the third sloping abutment surface (114) is between 12.5 and 50 degrees.

9. The abutment of claim 7 or 8, wherein the lobes (116) are formed of portions of circles.

10. A combination of a dental implant (20) according to any one of claims 1 to 6 and an abutment (100) connectable to said implant, wherein the abutment is according to claim 7-9.

11. The combination according to claim 10, wherein:
the first abutment surface (106) engages said internally facing sloping surface (80) when said dental implant (20) and said abutment (100) are connected; and
the second lobed abutment surface (108) corresponds to and is adjacent to said internally facing drive region (69) when said dental implant (20) and said abutment (100) are connected.

12. The combination according to claim 10 or 11, wherein the sloping angle (Y) of the third sloping abutment surface (114) is greater than the sloping angle (X) of the internally facing sloping surface (80) of the implant (20).

## Patentansprüche

1. Zahnimplantat (20), umfassend:
- einen Körper (32);
- eine Längsachse (L2);
- ein distales Ende (24);
- ein offenes proximales Ende (22);
- an einem äußeren Abschnitt des Körpers (32) vorgesehene Implantathaltemittel, wobei die Implantathaltemittel (38) mindestens ein Gewinde (38) umfassen;
- einen Kragen (36);
- eine Innenbohrung (66), die in einem Abschnitt des Körpers (32) bereitgestellt ist, wobei die Innenbohrung (66) ein proximales Ende an dem offenen proximalen Ende (22) des Körpers (32) und ein distales Ende (72) aufweist;
- einen ersten Abschnitt (68) der Innenbohrung (66), der eine nach innen weisende geneigte Fläche (80) umfasst, die ein proximales Ende und ein distales Ende aufweist, wobei sich die geneigte Fläche (80) von nahe dem proximalen Ende der Innenbohrung (66) zu dem distalen Ende der Innenbohrung (66) erstreckt, wobei die geneigte Fläche (80) mit einem geneigten Verlauf nach innen zu ihrem distalen Ende in einem Winkel von 10 Grad bis etwa 20 Grad relativ zu der Längsachse (L2) ausgebildet ist, wenn das Implantat (20) von der Seite betrachtet wird;
- einen zweiten Abschnitt der Innenbohrung (66), der einen nach innen weisenden Antriebsbereich (69) umfasst, der zwischen dem distalen Ende der geneigten Fläche (80) und dem distalen Ende der Innenbohrung positioniert ist, wobei der nach innen weisende Antriebsbereich (69) eine Vielzahl von konkaven Nasen (74) aufweist; und
- einen dritten Abschnitt der Innenbohrung (66), der einen Innengewindebereich (70) umfasst, der zwischen dem nach innen weisenden Antriebsbereich (69) und dem distalen Ende der Innenbohrung (66) positioniert ist,
**dadurch gekennzeichnet, dass** sich der Körper des Implantats (20) verjüngt, dass sich an einem proximalen Abschnitt (26) des Zahnimplantats (20) mindestens eine Nut (50) an der Stirnfläche (58) des mindestens einen Gewindes befindet, dass sich die Vielzahl von konkaven Nasen (74) teilweise bis in die nach innen weisende geneigten Fläche (80) erstreckt und dass ein Verhältnis (L:D) der Länge der Nasen (74) zum Implantatdurchmesser mehr als 0,4 beträgt.

2. Zahnimplantat (20) nach Anspruch 1, wobei der Implantatdurchmesser (D) kleiner als 3,1 mm, beispielsweise 3,0 mm, ist.

3. Zahnimplantat (20) nach Anspruch 1, wobei der Winkel etwa 12 Grad beträgt.

4. Zahnimplantat (20) nach einem der vorhergehenden Ansprüche, wobei das Verhältnis (L:D) der Länge der konkaven Nasen (74) zum Implantatdurchmesser mindestens 0,45 und insbesondere 0,52 beträgt.

5. Zahnimplantat (20) nach einem der vorhergehenden Ansprüche, wobei der Kragen (36) mit mindestens einer Nut (46) verstehen ist.

6. Zahnimplantat (20) nach einem der vorhergehenden Ansprüche, wobei die konkaven Nasen (74) aus Abschnitten von Kreisen gebildet sind.

7. Stützpfeiler (100), anschließbar zu einem Implantat (20) nach Anspruch 1, wobei der Stützpfeiler ein proximales Ende (102) und ein distales Ende (104) aufweist und Folgendes umfasst:
- eine erste Stützpfeilerfläche (106), die in Bezug auf eine Längsachse (L1) des Stützpfeilers von der Seite betrachtet zu ihrem distalen Ende hin nach innen geneigt ist;
- eine zweite vorspringende Stützpfeilerfläche (108) distal zu der ersten Stützpfeilerfläche und mit einer Vielzahl von Nasen (116);
- einen Prothesenanbringungsabschnitt (110);
- eine zentrale Bohrung (112), die sich durch mindestens einen Abschnitt des Prothesenanbringungsabschnitts und zu dem distalen Ende (104) des Stützpfeilers (100) erstreckt; und
- eine dritte geneigte Stützpfeilerfläche (114), die von der Seite betrachtet zu ihrem distalen Ende hin in Bezug auf die Längsachse (L1) nach innen geneigt ist,
**dadurch gekennzeichnet, dass** die zweite vorspringende Stützpfeilerfläche (108) unmittelbar benachbart zu der dritten geneigten Stützpfeilerfläche (114) liegt, sich die dritte geneigte Stützpfeilerfläche vollständig bis zu dem distalen Ende (104) des Stützpfeilers (100) erstreckt, sich die Nasen (116) der zweiten vorspringenden Stützpfeilerfläche (108) auf die dritte geneigte Stützpfeilerfläche (114) fortsetzen und sich zudem vollständig bis zu dem distalen Ende (104) des Stützpfeilers (100) erstrecken, und die Nasen (116) an der dritten geneigten Stützpfeilerfläche abgeschrägt sind.

8. Stützpfeiler nach Anspruch 7, wobei der Neigungswinkel (Y) der dritten geneigten Stützpfeilerfläche (114) zwischen 12,5 und 50 Grad liegt.

9. Stützpfeiler nach Anspruch 7 oder 8, wobei die Nasen (116) aus Abschnitten von Kreisen gebildet sind.

10. Kombination eines Zahnimplantats (20) nach einem der Ansprüche 1 bis 6 und eines Stützpfeilers (100), der an das Implantat anschließbar ist, wobei der Stützpfeiler wie gemäß Anspruch 7-9 ist.

11. Kombination nach Anspruch 10, wobei:
die erste Stützpfeilerfläche (106) in die nach innen weisende geneigte Fläche (80) eingreift, wenn das Zahnimplantat (20) und der Stützpfeiler (100) verbunden sind; und
die zweite vorspringende Stützpfeilerfläche (108) dem nach innen weisenden Antriebsbereich (69) entspricht und benachbart zu diesem ist, wenn das Zahnimplantat (20) und der Stützpfeiler (100) verbunden sind.

12. Kombination nach Anspruch 10 oder 11, wobei der Neigungswinkel (Y) der dritten geneigten Stützpfeilerfläche (114) größer ist als der Neigungswinkel (X) der nach innen weisenden geneigten Fläche (80) des Implantats (20).

## Revendications

1. Implant dentaire (20), comprenant :
- un corps (32) ;
- un axe longitudinal (L2) ;
- une extrémité distale (24) ;
- une extrémité proximale ouverte (22) ;
- un moyen de retenue d'implant prévu sur une partie externe dudit corps (32), le moyen de retenue d'implant (38) comprenant au moins un filetage (38) ;
- un collier (36) ;
- un alésage interne (66) prévu à l'intérieur d'une partie dudit corps (32), ledit alésage interne (66) ayant une extrémité proximale à l'extrémité proximale ouverte (22) dudit corps (32) et une extrémité distale (72) ;
- une première partie (68) dudit alésage interne (66) comprenant une surface inclinée tournée vers l'intérieur (80) ayant une extrémité proximale et une extrémité distale, ladite surface inclinée (80) s'étendant du voisinage de l'extrémité proximale dudit alésage interne (66) vers l'extrémité distale dudit alésage interne (66), ladite surface inclinée (80) étant formée avec un trajet incliné vers l'intérieur vers son extrémité distale selon un angle de 10 degrés à environ 20 degrés par rapport audit axe longitudinal (L2) lorsque l'implant (20) est vu de côté ;
- une deuxième partie dudit alésage interne (66) comprenant une région d'entraînement tournée vers l'intérieur (69) positionnée entre l'extrémité distale de ladite surface inclinée (80) et l'extrémité distale dudit alésage interne, la région d'entraînement tournée vers l'intérieur (69) ayant une pluralité de lobes concaves (74) ; et
- une troisième partie dudit alésage interne (66) comprenant une région filetée intérieurement (70) positionnée entre ladite région d'entraînement tournée vers l'intérieur (69) et l'extrémité distale dudit alésage interne (66),
**caractérisé en ce que** le corps de l'implant (20) est conique, au moins une rainure (50) est située sur la face (58) de l'au moins un filetage au niveau d'une partie proximale (26) de l'implant dentaire (20), la pluralité de lobes concaves (74) s'étendent partiellement vers le haut dans la surface inclinée tournée vers l'intérieur (80), et un rapport (L:D) de la longueur des lobes (74) au diamètre de l'implant est supérieur à 0,4.

2. Implant dentaire (20) selon la revendication 1, dans lequel le diamètre (D) de l'implant est inférieur à 3,1 mm, par exemple 3,0 mm.

3. Implant dentaire (20) selon la revendication 1, dans lequel ledit angle est d'environ 12 degrés.

4. Implant dentaire (20) selon une quelconque revendication précédente, dans lequel le rapport (L:D) de la longueur des lobes concaves (74) au diamètre de l'implant est d'au moins 0,45 et notamment de 0,52.

5. Implant dentaire (20) selon une quelconque revendication précédente, dans lequel le collier (36) est pourvu d'au moins une rainure (46) .

6. Implant dentaire (20) selon une quelconque revendication précédente, dans lequel les lobes concaves (74) sont formés de parties de cercles.

7. Butée (100) à relier à un implant (20) selon la revendication 1, dans laquelle ladite butée a une extrémité proximale (102) et une extrémité distale (104) et comprend :
- une première surface de butée (106) inclinée vers l'intérieur, vers son extrémité distale, par rapport à un axe longitudinal (L1) de la butée vue de côté ;
- une deuxième surface de butée lobée (108) distale de la première surface de butée et ayant une pluralité de lobes (116) ;
- une partie de montage de prothèse (110) ;
- un alésage central (112) s'étendant à travers au moins une partie de ladite partie de montage de prothèse et jusqu'à l'extrémité distale (104) de ladite butée (100) ; et
- une troisième surface de butée inclinée (114) qui est inclinée vers l'intérieur, vers son extrémité distale, par rapport à l'axe longitudinal (L1) vu de côté,
**caractérisée en ce que** ladite deuxième surface de butée lobée (108) est immédiatement adjacente à ladite troisième surface de butée inclinée (114), la troisième surface de butée inclinée s'étend tout le long jusqu'à l'extrémité distale (104) de la butée (100), les lobes (116) de la deuxième surface de butée lobée (108) se prolongent sur la troisième surface de butée inclinée (114) et s'étendent également tout le long jusqu'à l'extrémité distale (104) de la butée (100), et les lobes (116) au niveau de la troisième surface de butée inclinée sont biseautés.

8. Butée selon la revendication 7, dans laquelle l'angle d'inclinaison (Y) de la troisième surface de butée inclinée (114) est compris entre 12,5 et 50 degrés.

9. Butée selon la revendication 7 ou 8, dans laquelle les lobes (116) sont formés de parties de cercles.

10. Combinaison d'un implant dentaire (20) selon l'une quelconque des revendications 1 à 6 et d'une butée (100) pouvant être reliée audit implant, dans laquelle la butée est selon les revendications 7 à 9.

11. Combinaison selon la revendication 10, dans laquelle :
la première surface de butée (106) vient en prise avec ladite surface inclinée tournée vers l'intérieur (80) lorsque ledit implant dentaire (20) et ladite butée (100) sont reliés ; et
la deuxième surface de butée lobée (108) correspond et est adjacente à ladite région d'entraînement tournée vers l'intérieur (69) lorsque ledit implant dentaire (20) et ladite butée (100) sont reliés.

12. Combinaison selon la revendication 10 ou 11, dans laquelle l'angle d'inclinaison (Y) de la troisième surface de butée inclinée (114) est supérieur à l'angle d'inclinaison (X) de la surface inclinée tournée vers l'intérieur (80) de l'implant (20).
